(19) Europäisches Patentamt
European Patent Office
Office européen des brevets

(11) **EP 2 206 075 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **08845283.4**

(22) Anmeldetag: **18.10.2008**

(51) Int Cl.:
*G06K 9/46* (2006.01) *G06K 9/00* (2006.01)

(86) Internationale Anmeldenummer:
**PCT/DE2008/001705**

(87) Internationale Veröffentlichungsnummer:
**WO 2009/056095 (07.05.2009 Gazette 2009/19)**

(54) **DETEKTOR UND VERFAHREN ZUM ERKENNEN EINER FAHRSPURBEGRENZUNG**

DETECTOR AND METHOD FOR DETECTING A LANE BOUNDARY

DÉTECTEUR ET PROCÉDÉ POUR DÉTECTER UNE LIMITE DE VOIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.10.2007 DE 102007051967**

(43) Veröffentlichungstag der Anmeldung:
**14.07.2010 Patentblatt 2010/28**

(73) Patentinhaber: **ADC Automotive Distance Control Systems GmbH**
**88131 Lindau (DE)**

(72) Erfinder:
• **WALTER, Michael**
**9435 Widau (CH)**
• **KLEIN, Wladimir, Boris**
**88131 Lindau (DE)**
• **MÄDER, Dominik**
**88471 Laupheim (DE)**

(56) Entgegenhaltungen:
• **BERTOZZI M ET AL: "GOLD: A PARALLEL REAL-TIME STEREO VISION SYSTEM FOR GENERIC OBSTACLE AND LANE DETECTION" IEEE TRANSACTIONS ON IMAGE PROCESSING, IEEE SERVICE CENTER, PISCATAWAY, NJ, US, Bd. 7, Nr. 1, 1. Januar 1998 (1998-01-01), Seiten 62-80, XP000727376 ISSN: 1057-7149**

**Beschreibung**

Die Erfindung betrifft einen Detektor zum Erkennen einer Fahrspurbegrenzung gemäß Anspruch 1 und ein entsprechendes Verfahren gemäß Anspruch 9.

Bei Systemen zur Erkennung der Fahrspur auf Straßen erfolgt die Bildverarbeitung kantenbasiert. Klassische Varianten wählen die Kanten, die zur Prädiktion der Fahrspur herangezogen werden sollen, durch Analyse der Faltungsantworten. Die N Kanten mit den höchsten Faltungsantworten werden verwendet und deren Permutationen untersucht. Dieses Vorgehen erlaubt in vielen Fällen eine korrekte Funktion, da der Kontrast-Unterschied zwischen Fahrbahnbelag und -markierung meist am stärksten ausgeprägt ist.

Die DE 10 2005 044 977 A1 beschreibt ein Verfahren zur Erkennung von Fahrspurmarkierungen für ein bewegtes Kraftfahrzeug mit einer Strahlungsaufnahmeeinheit, bei dem ein Helligkeitsverlauf zeitabhängig in einem bezüglich eines Fahrzeugs vorgegebenen Bereich aufgezeichnet wird und eine Frequenzanalyse der aufgenommenen Helligkeitswerte oder einer von den aufgenommenen Werten abhängigen Hilfsfunktion durchgeführt wird. Bei Vorhandensein eines periodisch wiederkehrenden Verlaufs werden Fahrspurmarkierungen erkannt.

Die WO2007/033627A1 beschreibt ebenfalls ein Verfahren zur Erkennung von Fahrspurmarkierungen für ein bewegtes Kraftfahrzeug mit einer Bildaufnahmeeinheit. Die Bildaufnahmeeinheit ist auf die Fahrbahn vor dem Fahrzeug gerichtet und es werden in den aufgenommenen Bilddaten Helligkeitsunterschiede (Kontraste) analysiert und/oder Kanten extrahiert. Fahrspurmarkierungen werden anhand ihrer periodischen Anordnung erkannt. Zur Auswertung wird das Messsignal der Bildaufnahmeeinheit in ein anderes Koordinatensystem transformiert und die so erhaltene Hilfsfunktion wird auf periodische Strukturen hin untersucht. In einer Ausgestaltung des Verfahrens kann die Hilfsfunktion des Helligkeitsverlaufs im Zeitbereich ausgewertet und mit Hilfe von Korrelationsverfahren kann nach speziellen Signaturen typischer Markierungsarten gesucht werden. Dazu werden die Bilddaten oder das zeitabhängige Hilfssignal mit einem vorgegeben, für eine bestimmte Markierungsart typischen Signalverlauf korreliert, d.h. es wird entweder eine Faltung der beiden Signale oder eine Kreuzkorrelation durchgeführt. Anhand des Ergebnisses kann die Ähnlichkeit der beiden Signale ermittelt und somit entschieden werden, ob es sich um die vorgegebene Markierungsart handelt oder nicht. Eine Fahrspurmarkierungserkennung mittels Korrelation des gemessenen Helligkeitsverlaufs mit einem für eine Markierungsart typischen Verlauf kann in einer speziellen Ausgestaltung des Verfahrens auch im Raumbereich anstatt im Zeitbereich durchgeführt werden.

Allerdings können unter bestimmten Umständen auch Strukturen auftreten, deren Schwarz-Kontrastunterschied groß ist, die aber keine Fahrspur darstellen. Dies können beispielsweise auf der Fahrbahn reflektierte Scheinwerfer oder Reflektoren in Tunneln sein, die eine falsche Fahrspurschätzung zur Folge haben.

Die Veröffentlichung "GOLD: A PARALLEL REAL-TIME STEREO VISION SYSTEM FOR GENERIC OBSTACLE AND LANE DETECTION", BERTOZZI M ET AL, IEEE TRANSACTIONS ON IMAGE PROCESSING, IEEE SERVICE CENTER, PISCATAWAY, NJ, US, (19980101), vol. 7, no. 1, ISSN 1057-7149, PAGE 62 - 80, XP000727376 [T] beschreibt ein generisches Hindemis- und Fahrspur-Erkennungssystem namesn GOLD sowie eine Stereo-Visionbasierte Hardware- und Software-Architektur zur Implementierung dieses Systems. Im Abschnitt "Feature Identification" dieser Veröffentlichung ist die Verarbeitung eines Bildes mit gekennzeichneten Kanten mittels einer Histogramm-Analyseeinheit beschrieben.

Die Aufgabe der vorliegenden Erfindung besteht darin, einen Detektor und ein Verfahren zum Erkennen einer Fahrspurbegrenzung vorzuschlagen, die eine Verbesserung der Erkennung einer Fahrspurbegrenzung zu ermöglichen.

Diese Aufgabe wird durch einen Detektor zum Erkennen einer Fahrspurbegrenzung mit den Merkmalen des Anspruchs 1 sowie ein entsprechendes Verfahren mit den Merkmalen des Anspruchs 9 gelöst. Weitere Ausgestaltungen der Erfindung sind Gegenstand der abhängigen Ansprüche.

Ein wesentlicher Gedanke der Erfindung besteht darin, eine einfache Suche nach Maxima der Faltungsantworten durch eine Histogrammanalyse von "rohen" Kanten zu erweitern, insbesondere indem mögliche Kantenpaare aus Permutationen der in einem Messfenster liegenden Kanten gebildet werden und die Breite der Kantenpaare in ein Histogramm aufgenommen werden. Durch eine Gewichtung der Kanten kann ferner eine Erkennung der Fahrspurbegrenzung deutlich verbessert werden. Dies beruht darauf, dass die Kanten zunächst als Paar gruppiert werden können und nachfolgend die Histogramm-Verteilung der Häufigkeiten von Abständen zwischen zwei zu diesem Paar gruppierten Kanten ermittelt werden kann. Diejenigen Kanten, die zu einem Paar gehören, deren Abstand eine große Häufigkeit in dem Histogramm aufweist, können als Kanten einer Fahrspurbegrenzung aufgefasst werden. Dieser Einschätzung liegt die Annahme zugrunde, dass Fahrspurbegrenzungen gegenüber anderen Bildartefakten und Reflexionen häufig auftreten, sodass der Abstand zwischen zwei Kanten, die eine Fahrspurbegrenzung darstellen, in dem optischen Abbild ebenfalls häufig auftreten wird. Wenn nun diejenigen Kanten ein hohes Gewicht erhalten, die zu einem Paar von "Fahrspurbegrenzung"-Kanten gehören, kann die Erkennung der Fahrspurbegrenzung in einem iterativen Ansatz deutlich verbessert werden.

Die vorliegende Erfindung bietet den Vorteil, dass durch die Paarbildung von Kanten und die Auswertung eines Histogramms die zuverlässige und korrekte Zuordnung von Kanten in dem optischen Abbild zu Fahrspurbegrenzungen deutlich erhöht werden kann. Insbesondere die Auswertung der Abstände zwischen zwei Kanten kann verhindern, dass Bildartefakte, wie beispielsweise die von der Fahrbahn gespiegelten Scheinwerfer, nicht als Fahrspurbegrenzungen interpretiert werden. Dies erhöht die Robustheit der Erkennung der Fahrspurbegrenzung und somit auch die Robustheit eines mit einem erfindungsgemäßen Detektor ausgestatteten Fahrerassistenzsystems.

Die Erfindung betrifft nun gemäß einer Ausführungsform einen Detektor zum Erkennen einer Fahrspurbegrenzung aus einem digitalisierten optischen Abbild eines Bereichs vor dem Fahrzeug, in dem aufgetretene Kanten gekennzeichnet sind, wobei der Detektor folgende Merkmale aufweist:

- ein Korrelator, der ausgebildet ist, um in einem Bildsegment des optischen Abbildes die in dem optischen Abbild gekennzeichneten Kanten einer Faltungskorrelation zu unterziehen und die entsprechende Faltungsantwort mit einem Gewichtungsfaktor zu gewichten, um diejenigen Kanten mit den N höchsten gewichteten Faltungsantworten zu extrahieren und als Fahrspurbegrenzung zu erkennen, wobei N eine vorbestimmte natürliche Zahl darstellt;
- eine Histogramm-Analyseeinheit, die ausgebildet ist, um die extrahierten Kanten zu Paaren zu gruppieren und um eine Häufigkeitsverteilung der Abstände zwischen zwei zu einem Paar gruppierten Kanten als Histogramm zu ermitteln und aus der Häufigkeitsverteilung diejenigen Abstände zwischen zwei gruppierten Kanten als Kanten-Sollbreiten zu ermitteln, die eine Häufigkeitsspitze oder ein Häufigkeitsplateau in dem Histogramm bilden; und
- eine Gewichtungsfaktor-Bestimmungseinheit, die ausgebildet ist, um für eine Kante den Gewichtungsfaktor für einen nachfolgenden Zyklus der Faltungskorrelation in dem Korrelator derart zu bestimmen, dass das durch den Gewichtungsfaktor bestimmte Gewicht für eine Kante der als Paar gruppierten Kanten umso größer ist, je geringer die Abweichung des Abstandes zwischen den gruppierten Kanten und der Kanten-Sollbreite ist.

In einer weiteren Ausführungsform der vorliegenden Erfindung ist die Gewichtungsfaktor-Bestimmungseinheit ausgebildet, um den Gewichtungsfaktor G(k) einer Kante k auf der Basis der Zielfunktion

$$G(k) = 1 - \frac{|Kantenpaarbreite - Kantensollbreite|}{Maximalabweichung}$$

zu bestimmen, wobei die Variable "Kantenpaarbreite" den Abstand zwischen den jeweils betrachteten gruppierten Kanten darstellt, zu denen die Kante k gehört; die Variable "Kantensollbreite" die Kanten-Sollbreite darstellt und die Variable "Maximalabweichung" die maximale Abweichung zwischen der Kantenpaarbreite und der Kanten-Sollbreite darstellt. Die Bestimmung des Gewichtungsfaktors auf diese Weise ermöglicht eine gute und robuste Möglichkeit, um in dem optischen Abbild erfasste Kanten schnell und zuverlässig als Fahrspurbegrenzung erkennen zu können.

In einer weiteren Ausführungsform der vorliegenden Erfindung ist die Histogramm-Analyseeinheit ausgebildet, um bei der Bestimmung der Häufigkeitsverteilung der Abstände zwischen zwei zu einem Paar gruppierten Kanten eine Häufigkeitsverteilung in einem vorausgehenden Iterationsschritt zu berücksichtigen. Die Verwendung einer derartigen Iteration bietet den Vorteil, dass die Häufigkeitsverteilung noch genauer bestimmt werden kann. Dies resultiert aus einer größeren Datenbasis zur Berechnung der Häufigkeiten der Abstände zwischen zwei zu einem Paar gruppierten Kanten.

Ferner ist es auch günstig, wenn in einer weiteren Ausführungsform die Histogramm-Analyseeinheit ausgebildet ist, um die Kanten-Sollbreite derart zu bestimmen, dass für den Fall, dass ein höherer Wert einer bestimmten Kanten-Sollbreite gegenüber einer in einem früheren Iterationsschritt bestimmten Kanten-Sollbreite dieser höhere Wert als Kanten-Sollbreite verwendet wird. Eine derartige Ausgestaltung der Histogramm-Analyseeinheit bietet den Vorteil, dass sichergestellt werden kann, dass Bildartefakte mit sehr geringem Abstand zwischen zwei Kanten mit einer je Iteration immer geringer werdenden Wahrscheinlichkeit als Kanten-Sollbreite berücksichtigt werden. Dies führt wiederum zu einer robusteren Bildauswertung des optischen Abbildes.

Auch kann in einer weiteren Ausführungsform die Histogramm-Analyseeinheit ausgebildet sein, um die Kanten-Sollbreite derart zu bestimmen, dass für den Fall, dass ein niedrigerer Wert einer bestimmten Kanten-Sollbreite gegenüber einer in einem früheren Iterationsschritt bestimmten Kanten-Sollbreite auftritt, eine Tiefpassfilterung dieser beiden bestimmten Werte für die Kanten-Sollbreite durchgeführt wird. Der Vorteil einer solchen Ausführungsform der vorliegenden Erfindung besteht ebenfalls in einer robusteren Bildauswertung, da durch die Tiefpassfilterung die Effekte von kleinflächigen Bildstörungen ausgeglichen werden können.

Zusätzlich kann gemäß einer Ausführungsform der vorliegenden Erfindung die Histogramm-Analyseeinheit ausgebildet sein, um eine Mehrzahl von Histogrammen zu berechnen, die jeweils unter Annahme von unterschiedlichen Nickwinkeln bei der Aufnahme des optischen Abbildes ermittelt werden, wobei die Histogramm-Analyseeinheit ferner ausgebildet ist, um denjenigen Nickwinkel als gültig auszuwählen, auf dessen Basis dasjenige Histogramm mit den ausgeprägtesten Häufigkeitsspitzen auftritt und wobei der Detektor ferner eine Umrechnungseinheit aufweist, die ausgebildet ist, um aus dem optischen Abbild und dem ausgewählten Nickwinkel eine Bestimmung der realen Dimension der Fahrspurbegrenzung vor dem Fahrzeug zu ermitteln. Eine derartige Ausführungsform der vorliegenden Erfindung bietet zusätzlich zu der Erkennung von Fahrspurbegrenzungen noch den Vorteil, dass das gebildete Histogramm für weitere Zwecke verwendbar ist. Da die Feststellung des Nickwinkels wichtig für die Umrechnung der Beziehung der Kanten in dem optischen Abbild zu der realen Situation vor dem Fahrzeug ist, hilft die Schätzung des Nickwinkels weiterhin zur Bestimmung der tatsächlichen Markierungssituation mit der Fahrspurbegrenzung auf der Fahrbahn.

Insbesondere kann auch bei einer Ausführungsform der vorliegenden Erfindung die Histogramm-Analyseeinheit ausgebildet sein, um Kanten einer Mehrfachmarkierung durch einen Vergleich der Abstände und Häufigkeiten von zu einem Paar gruppierten Kanten an zumindest zwei verschiedenen Stellen in dem Histogramm zu erkennen, an denen Häufigkeitsspitzen oder Häufigkeitsplateaus in dem Histogramm auftreten. Der Vorteil einer derartigen Ausführungsform besteht darin, dass die auf einer Fahrbahn oftmals vorhandenen Mehrfachmarkierungen ebenfalls in einer einfachen Weise unter Zuhilfenahme des ermittelten Histogramms bestimmt werden können.

Günstig ist es auch, wenn die Histogramm-Auswerteeinheit in einer weiteren Ausführungsform ausgebildet ist, um eine Doppelmarkierung dann zu erkennen, wenn in dem Histogramm eine Häufigkeitsspitze oder ein Häufigkeitsplateau erfasst wird, das im Vergleich zu einer weiteren Häufigkeitsspitze oder einem weiteren Häufigkeitsplateau eine doppelt bis dreifache Breite und eine halbe Anzahl von Häufigkeiten aufweist. Eine solche Ausführungsform der vorliegenden Erfindung bietet eine einfache und zugleich robuste und zuverlässige Weise zur Bestimmung der auf Fahrbahnen am häufigsten vorkommenden Mehrfachmarkierung, nämlich einer Doppelmarkierung.

Auch betrifft die vorliegende Erfindung in einer Ausführungsform ein Verfahren zum Erkennen einer Fahrspurbegrenzung aus einem digitalisierten optischen Abbild des Bereichs vor dem Fahrzeug, in dem aufgetretene Kanten gekennzeichnet sind, wobei das Verfahren folgende Schritte aufweist:

- Korrelieren einer in einem Bildsegment des optischen Abbildes gekennzeichneten Kante in einer Faltungskorrelation und Gewichten der Faltungsantwort mit einem Gewichtungsfaktor, um diejenigen Kanten mit den N höchsten gewichteten Faltungsantworten zu extrahieren und als Fahrspurbegrenzung zu erkennen, wobei N eine vorbestimmte natürliche Zahl darstellt;
- Bilden und Analysieren eines Histogramms, um die extrahierten Kanten zu Paaren zu gruppieren und um eine Häufigkeitsverteilung der Abstände zwischen zwei zu einem Paar gruppierten Kanten als Histogramm zu erhalten und aus der Häufigkeitsverteilung diejenigen Abstände zwischen zwei gruppierten Kanten als Kanten-Sollbreiten zu ermitteln, die eine Häufigkeitsspitze oder ein Häufigkeitsplateau in dem Histogramm bilden; und
- Bestimmen des Gewichtungsfaktors, um für eine Kante den Gewichtungsfaktor für einen nachfolgenden Zyklus der Bestimmung der Faltungskorrelation im Schritt des Korrelierens derart zu bestimmen, dass das durch den Gewichtungsfaktor bestimmte Gewicht für eine Kante der als Paar gruppierten Kanten umso größer ist, je geringer die Abweichung des Abstandes zwischen den gruppierten Kanten und der Kanten-Sollbreite ist.

Um effizient in einer Computer-gestützten Plattform umgesetzt zu werden, kann die vorliegende Erfindung gemäß einer weiteren Ausführungsform auch als Computerprogramm mit Programmcode zur Durchführung des oben genannten Verfahrens ausgestaltet sein, wenn das Computerprogramm auf einem Computer ausgeführt wird.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen aufgeführten Begriffe und zugeordneten Bezugszeichen verwendet.

Die Zeichnungen zeigen in:

Fig. 1    ein Blockschaltbild eines Ausführungsbeispiels des erfindungsgemäßen Detektors;

Fig. 2    ein Beispiel eines von der Histogramm-Analyseeinheit gebildeten Histogramms in dem die Häufigkeiten von Abständen von gruppierten Kanten aufgetragen sind; und

Fig. 3    ein Ablaufdiagramm eines Ausführungsbeispiels des erfindungsgemäßen Verfahrens.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

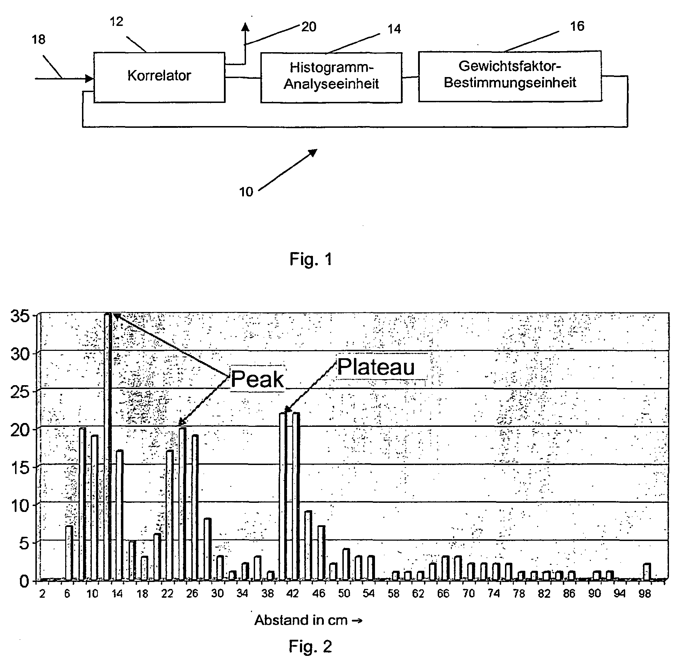

Fig. 1 zeigt ein Blockschaltbild eines Ausführungsbeispiels des erfindungsgemäßen Detektors 10. Der Detektor 10 umfasst einen Korrelator 12, eine Histogramm-Analyseeinheit 14, die mit dem Korrelator 12 verbunden ist sowie eine Gewichtungsfaktor-Bestimmungseinheit 16, die mit der Histogramm-Analyseeinheit 14 verbunden ist und ferner ausgebildet ist, den bestimmten Gewichtungsfaktor für die Berechnung der Faltungskorrelation in einem nachfolgenden Iterationsschritt an den Korrelator 12 zu übergeben.

Der Korrelator 12 weist ferner einen Eingang 18 auf, der zum Empfangen von Bilddaten des optischen Abbildes vor dem Fahrzeug vorgesehen ist. In diesen Bilddaten sind die auftretenden Bildkanten (im nachfolgenden aus Gründen der Vereinfachung lediglich als Kanten bezeichnet) bereits markiert, was beispielsweise durch die Anwendung einer herkömmlichen Kanten-Detektion auf die ursprünglichen digitalen Bilddaten möglich ist.

Weiterhin weist der Korrelator 12 einen Ausgang 20 auf, über den eine Information über eine Kante als zu einer Fahrspurbegrenzung gehörig an eine weitere Komponente eines Fahrerassistenzsystems möglich ist.

Zum Betrieb des in Fig. 1 dargestellten Detektors 10 werden digitalisierte Bilddaten des optischen Abbildes eines Fahrbahnbereichs vor dem Fahrzeug mit bereits markierten Kanten über den Eingang 18 an den Korrelator 12 geliefert. Unter Verwendung dieser Bilddaten (und eines vorgegebenen Initialwertes für den Gewichtungsfaktor von zum Beispiel 1) wird in dem Korrelator 12 eine Faltungskorrelation durchgeführt und die resultierenden Kanten mit den jeweils entsprechenden Gewichtungsfaktoren gewichtet. Diejenigen Kanten, die die höchsten gewichteten Faltungsantworten aufweisen, werden als Kanten zur Bestimmung der Fahrspurbegrenzung über den Ausgang 20 an eine weitere Komponente eines Fahrerassistenzsystems ausgegeben.

Um die Verbesserung bei der Detektion der relevanten Kanten zu ermöglichen, werden die Bilddaten des optischen Abbildes zur Histogramm-Analyseeinheit 14 weitergeleitet, in welcher die in den Bilddaten enthaltenen Kanten paarweise gruppiert werden. Jedes so gruppierte Kantenpaar wird in einem Histogramm widergegeben, in dem die Häufigkeiten der Abstände der beiden Kanten des Kantenpaars (beispielsweise in 1-cm-Schritten) in den Bilddaten auftreten. Ein solches Histogramm ist exemplarisch in Fig. 2 dargestellt. Aus einem solchen Histogramm wird dann in der Histogramm-Analyseeinheit derjenige Abstand zwischen den beiden Kanten des Kantenpaars ermittelt, bei dem Häufigkeitsspitzen oder Häufigkeitsplateaus auftreten. Eine Häufigkeitsspitze zeichnet sich dadurch aus, dass die Anzahl der Häufigkeiten bei dem entsprechenden Abstand gegenüber den Häufigkeiten der in diesem Histogramm benachbarten Abstände deutlich höher ausfällt. Ein Häufigkeitsplateau tritt dann auf, wenn sich in dem Histogramm eingetragene Häufigkeiten von benachbarten Abständen innerhalb eines in Toleranzbereichs befinden, d.h. sich beispielsweise nur um bis zu bestimmten vorgegebenen Auftretenshäufigkeiten unterscheiden.

Hieran anschließend erfolgt in der Gewichtungsfaktor-Bestimmungseinheit 16 die Adaption des Gewichtungsfaktors. Dies dient dazu, dass diejenigen Kanten ein höheres Gewicht bei der Auswahl der Fahrspurbegrenzung erhalten, die einen Abstand von anderen Kanten haben, der in den Bilddaten häufig vorkommt. Nachdem, annahmegemäß, die Fahrspurbegrenzungen die häufigste Ursache für auf der Fahrbahn auftretende Kanten darstellen, kann hierdurch eine Verbesserung der Zuverlässigkeit der Erkennung der Fahrspurbegrenzung realisiert werden. Konkret stellt der Gewichtsfaktor ein Gütemaß für die Kante dar und kann die geringste Abweichung der betrachteten Kantenpaarpermutationen von den festgestellten Kanten-Sollbreiten widerspiegeln. Die Güte ist dabei umso größer, je genauer die untersuchte Breite mit einem Maximum aus dem Histogramm zusammenfällt. Beispielsweise kann die Berechnung des Gewichtsfaktors $G(k)$ der Kante $k$ auf der Basis der vorstehend genannten Gleichung für $G(k)$ erfolgen.

Der ermittelte Gewichtsfaktor wird nachfolgend an den Korrelator 12 übermittelt, der diesen in einem nachfolgenden Iterationsschritt verwendet. Durch ein solches rekursives Vorgehen ist die Bestimmung der Kanten der Fahrspurbegrenzung deutlich zuverlässiger möglich.

Als ein weiterer (Neben-) Aspekt kann das ermittelte Histogramm auch zur Schätzung eines Nickwinkels verwendet werden, in welchem die Bilddatenliefernde Kamera auf die Fahrbahn blickt. Eine genauere Erläuterung wird nachfolgend noch detaillierter angegeben. Hierdurch ist eine Verbesserung des Auflösungsvermögens bei der Schätzung der tatsächlichen Dimensionen vor dem Fahrzeug möglich.

Schließlich lassen sich aus dem Histogramm auch auf der Fahrbahn angebrachte Mehrfachmarkierungen ermitteln. Dies kann insbesondere durch einen Vergleich der absoluten Werte der Häufigkeiten und Abstände der gruppierten Kantenpaare bei Häufigkeitsspitzen bzw. Häufigkeitsplateaus erfolgen.

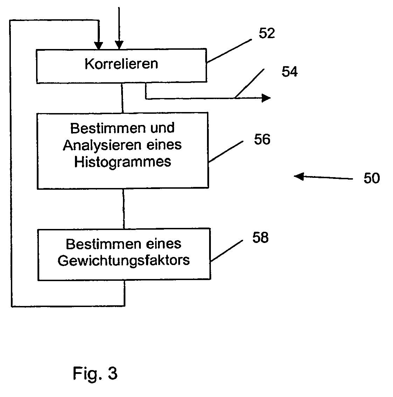

Weiterhin ist in Fig. 3 ein Ablaufdiagramm 50 eines Ausführungsbeispiels des erfindungsgemäßen Verfahrens skizziert. Das Verfahren 50 umfasst in einem ersten Schritt 52 ein Korrelieren einer in einem Bildsegment des optischen Abbildes gekennzeichneten Kante in einer Faltungskorrelation und ein Gewichten der Faltungsantwort mit einem Gewichtungsfaktor, um diejenigen Kanten mit den N höchsten gewichteten Faltungsantworten zu extrahieren und als Fahrspurbegrenzung zu erkennen, wobei N eine vorbestimmte natürliche Zahl darstellt. Hierbei können die extrahierten Kanten an eine weitere Fahrerassistenzsystemeinheit geliefert werden (Verzweigung 54), um die Information über die Position des Fahrzeugs auf der Fahrbahn in dem Fahrerassistenzsystem zu verwerten. In einem weiteren Schritt 56 kann ein Bilden und Analysieren eines Histogramms erfolgen, um die extrahierten Kanten zu Paaren zu gruppieren und um eine Häufigkeitsverteilung der Abstände zwischen zwei zu einem Paar gruppierten Kanten als Histogramm zu erhalten und aus der Häufigkeitsverteilung diejenigen Abstände zwischen zwei gruppierten Kanten als Kanten-Sollbreiten zu ermitteln, die eine Häufigkeitsspitze oder ein Häufigkeitsplateau in dem Histogramm bilden. Dies ermöglicht die Bestimmung von besonders häufig auftretenden Abständen zwischen Kanten. In einem letzten Schritt 58 erfolgt ein Bestimmen des Gewichtungsfaktors, um für eine Kante den Gewichtungsfaktor für einen nachfolgenden Zyklus der Faltungskorrelation im Schritt des Korrelierens 52 derart zu bestimmen, dass das durch den Gewichtungsfaktor bestimmte Gewicht für eine Kante der als Paar gruppierten Kanten umso größer ist, je geringer die Abweichung zwischen dem Abstand zwischen den gruppierten Kanten und der Kanten-Sollbreite ist. Hierdurch lassen sich diejenigen Kanten besonders stark berücksichtigen, die in der in einem bestimmten Abstand zu einer anderen Kante angeordnet sind, der in etwa einer Breite einer Fahrspurbegrenzung entspricht. Der ermittelte Gewichtungsfaktor kann dann in einem nachfolgenden Schritt des Korrelierens verwendet werden, so dass sich die Zuverlässigkeit der Fahrspurerkennung mit jedem Iterationszyklus erhöht.

Zusammenfassend ist anzumerken, dass zur Verbesserung der Erkennung einer Fahrspurbegrenzung die einfache Suche nach Maxima der Faltungsantworten durch eine Histogrammanalyse der rohen Kanten erweitert wird. Hierbei werden mögliche Kantenpaare aus den Permutationen der in einem Messfenster liegenden Kanten gebildet. Die Breiten der Kantenpaare werden in ein Histogramm aufgenommen. In diesem ist die Auftretenshäufigkeit der Breiten mit einer Auflösung von z.B. einem Zentimeter dargestellt.

Zur Erhöhung der Robustheit und Berücksichtigung der zeitlichen Historie kann das Histogramm mit dem der vorausgegangenen Zyklen kombiniert werden. Ist z.B. der neue Wert für eine Kantenbreite größer als der letzte, so kann der neue Wert übernommen werden. Ist dies nicht der Fall kann eine Tiefpassfilterung beider Werte ausgeführt werden.

In einem ersten Ausgangsszenario kann die Kantenauswahl für die Fahrspurprädiktion getroffen werden. Durch Analyse des Histogramms wird die Kantenauswahl verbessert. Hierzu können die N höchsten Extrema der Häufigkeitsverteilung als Sollbreiten ermittelt werden. Es werden zum Beispiel einzelne Peaks und zum anderen Plateaus als Maxima extrahiert (siehe Fig. 2).

In einer weiteren Iteration wird beispielsweise wieder die Breite aller möglichen Kantenpaarpermutationen berechnet. Für jede Kante wird ein Gewichtsfaktor ermittelt. Dieser stellt ein Gütemaß für die Kante dar und beinhaltet die geringste Abweichung der betrachteten Kantenpaarpermutation von den N Sollbreiten. Die Güte ist umso größer, je genauer die untersuchte Breite mit einem Maximum aus dem Histogramm zusammenfällt. Zu Ende der Iteration liegt für jede Kante das individuell extremale Gütemaß vor.

Die zur Fahrbahnschätzung zu verwendenden Kanten werden weiterhin durch Extremwertsuche der Faltungsantworten ausgewählt. Allerdings wird jede Faltungsantwort vor der Vergleichsoperation mit ihrem korrespondierenden Gütefaktor gewichtet.

Somit werden Kanten, die zu einer Kantenpaarpermutation gehören, die nahe einem Maximum des Histogramms liegt, mit einer größeren Wahrscheinlichkeit zur Fahrspurprädiktion herangezogen.

In einem zweiten Aspekt der vorliegenden Erfindung kann eine Nickwinkelschätzung durchgeführt werden. Das Histogramm kann auch zu weiteren Analysen herangezogen werden. Denn falls der Nickwinkel einen falschen Wert besitzt, wird die Transformation von Kamerabildkoordinaten in Weltkoordinaten ungenau. Dies führt dazu, dass in Realität identische Breitenwerte, in unterschiedlicher Kameraentfernung, Abweichungen zueinander aufweisen. Im Histogramm wird dies an weniger scharfen Extremwerten deutlich. Durch Berechnen des Histogramms für mehrere angenommene Nickwinkel kann der mit den schärfsten Extrema korrespondierende Winkel als gültiger ausgewählt werden. Dies stellt eine Möglichkeit der iterativen Schätzung des Nickwinkels dar.

In einem dritten Aspekt der vorliegenden Erfindung kann eine Erkennung von Mehrfachmarkierungen durchgeführt werden. Des Weiteren kann durch Analyse der Histogrammmaxima auf mögliche Mehrfachmarkierungen geschlossen werden.

Eine Doppelmarkierung liegt z.B. vor, wenn ein Maximum existiert, das bei einer doppelt bis dreifach so großen Breite und einer halb so großen Häufigkeit vorliegt, als ein anderes Maximum.

Bezugszeichen

10 Detektor
12 Korrelator
14 Histogramm-Analyseeinheit
16 Gewichtungsfaktor-Bestimmungseinheit
18 Eingang des Korrelators 12, Bilddaten des optischen Abbildes vor dem Fahrzeug
20 Ausgang, Information über die Kanten, die als Fahrspurbegrenzung verwendet werden können
50 Verfahren zum Erkennen einer Fahrspurbegrenzung
52 Schritt des Korrelierens
54 Ausgabe der Information über die Kanten, die als Fahrspurbegrenzung verwendet werden können
56 Schritt des Bildens und Analysierens des Histogramms
58 Schritt des Bestimmens des Gewichtungsfaktors

**Patentansprüche**

1. Detektor (10) zum Erkennen einer Fahrspurbegrenzung aus einem digitalisierten optischen Abbild des Bereichs vor dem Fahrzeug, in dem aufgetretene Kanten gekennzeichnet sind, wobei der Detektor (10) folgende Merkmale aufweist:

   - einen Korrelator (12), der ausgebildet ist, um in einem Bildsegment des optischen Abbildes die in dem optischen Abbild gekennzeichneten Kanten einer Faltungskorrelation zu unterziehen und die entsprechende Faltungsantwort mit einem Gewichtungsfaktor zu gewichten, um diejenigen Kanten mit den N höchsten gewichteten Faltungsantworten zu extrahieren und als Fahrspurbegrenzung zu erkennen, wobei N eine vorbestimmte natürliche Zahl darstellt;
   - eine Histogramm-Analyseeinheit (14), die ausgebildet ist, um die extrahierten Kanten zu Paaren zu gruppieren und um eine Häufigkeitsverteilung der Abstände zwischen zwei zu einem Paar gruppierten Kanten als Histogramm zu ermitteln und aus der Häufigkeitsverteilung diejenigen Abstände zwischen zwei gruppierten Kanten als Kanten-Sollbreiten zu ermitteln, die eine Häufigkeitsspitze oder ein Häufigkeitsplateau in dem Histogramm bilden, wobei das Histogramm auf Basis einer Transformation der Kamerabildkoordinaten in Weltkoordinaten unter Annahme eines Nickwinkels bei der Aufnahme des optischen Abbildes ermittelt wird; und
   - eine Gewichtungsfaktor-Bestimmungseinheit (16), die ausgebildet ist, um für eine Kante den Gewichtungsfaktor für einen nachfolgenden Zyklus der Faltungskorrelation in dem Korrelator (12) derart zu bestimmen, dass das durch den Gewichtungsfaktor bestimmte Gewicht für eine Kante der als Paar gruppierten Kanten umso größer ist, je geringer die Abweichung des Abstandes zwischen den gruppierten Kanten und der Kanten-Sollbreite ist.

2. Detektor (10) gemäß Anspruch 1,
   **dadurch gekennzeichnet, dass**
   die Gewichtungsfaktor-Bestimmungseinheit (16) ausgebildet ist, um den Gewichtungsfaktor G(k) einer Kante k auf der Basis der Zielfunktion

$$G(k) = 1 - \frac{\left| Kantenpaarbreite - Kantensollbreite \right|}{Maximalabweichung}$$

   zu bestimmen, wobei die Variable "Kantenpaarbreite" den Abstand zwischen den jeweils betrachteten gruppierten Kanten darstellt, zu denen die Kante k gehört; die Variable "Kantensollbreite" die Kanten-Sollbreite darstellt und die Variable "Maximalabweichung" die maximale Abweichung zwischen der Kantenpaarbreite und der Kanten-Sollbreite darstellt.

3. Detektor (10) gemäß einem der Ansprüche 1 oder 2,
   **dadurch gekennzeichnet, dass**
   die Histogramm-Analyseeinheit (14) ausgebildet ist, um bei der Bestimmung der Häufigkeitsverteilung der Abstände zwischen zwei zu einem Paar gruppierten Kanten eine Häufigkeitsverteilung in einem vorausgehenden Iterationsschritt zu berücksichtigen.

4. Detektor (10) gemäß Anspruch 3,
   **dadurch gekennzeichnet, dass**
   die Histogramm-Analyseeinheit (14) ausgebildet ist, um die Kanten-Sollbreite derart zu bestimmen, dass für den Fall, dass ein höherer Wert einer bestimmten Kanten-Sollbreite gegenüber einer in einem früheren Iterationsschritt bestimmten Kanten-Sollbreite dieser höhere Wert als Kanten-Sollbreite verwendet wird.

5. Detektor (10) gemäß einem der Ansprüche 3 oder 4,
   **dadurch gekennzeichnet, dass**
   die Histogramm-Analyseeinheit (14) ausgebildet ist, um die Kanten-Sollbreite derart zu bestimmen, dass für den Fall, dass ein niedrigerer Wert einer bestimmten Kanten-Sollbreite gegenüber einer in einem früheren Iterationsschritt bestimmten Kanten-Sollbreite auftritt, eine Tiefpassfilterung dieser beiden bestimmten Werte für die Kanten-Sollbreite durchgeführt wird.

6. Detektor (10) gemäß einem der Ansprüche 1 bis 5,

**dadurch gekennzeichnet, dass**

die Histogramm-Analyseeinheit (14) ausgebildet ist, um eine Mehrzahl von Histogrammen zu berechnen, die jeweils unter Annahme von unterschiedlichen Nickwinkeln bei der Aufnahme des optischen Abbildes ermittelt werden, wobei die Histogramm-Analyseeinheit (14) ferner ausgebildet ist, um denjenigen Nickwinkel als gültig auszuwählen, auf dessen Basis dasjenige Histogramm mit den ausgeprägtesten Häufigkeitsspitzen auftritt und wobei der Detektor (10) ferner eine Umrechnungseinheit aufweist, die ausgebildet ist, um aus dem optischen Abbild und dem ausgewählten Nickwinkel eine Bestimmung der realen Dimension der Fahrspurbegrenzung vor dem Fahrzeug zu ermitteln.

7. Detektor (10) gemäß einem der Ansprüche 1 bis 6,
   **dadurch gekennzeichnet, dass**
   die Histogramm-Analyseeinheit (14) ausgebildet ist, um Kanten einer Mehrfachmarkierung durch einen Vergleich der Abstände und Häufigkeiten von zu einem Paar gruppierten Kanten an zumindest zwei verschiedenen Stellen zu erkennen, an denen Häufigkeitsspitzen oder Häufigkeitsplateaus in dem Histogramm auftreten.

8. Detektor (10) gemäß Anspruch 8,
   **dadurch gekennzeichnet, dass**
   die Histogramm-Analyseeinheit (14) ausgebildet ist, um eine Doppelmarkierung dann zu erkennen, wenn in dem Histogramm eine
   Häufigkeitsspitze oder ein Häufigkeitsplateau erfasst wird, das im Vergleich zu einer weiteren Häufigkeitsspitze oder einem weiteren Häufigkeitsplateau eine doppelt bis dreifache Breite und eine halbe Anzahl von Häufigkeiten aufweist.

9. Verfahren (50) zum Erkennen einer Fahrspurbegrenzung aus einem digitalisierten optischen Abbild des Bereichs vor dem Fahrzeug, in dem aufgetretene Kanten gekennzeichnet sind, wobei das Verfahren folgende Schritte umfasst:

   - Korrelieren (52) einer in einem Bildsegment des optischen Abbildes gekennzeichneten Kante in einer Faltungskorrelation und Gewichten der Faltungsantwort mit einem Gewichtungsfaktor, um diejenigen Kanten mit den N höchsten gewichteten Faltungsantworten zu extrahieren und als Fahrspurbegrenzung zu erkennen, wobei N eine vorbestimmte natürliche Zahl darstellt;
   - Bilden und Analysieren (56) eines Histogramms, um die extrahierten Kanten zu Paaren zu gruppieren und um eine Häufigkeitsverteilung der Abstände zwischen zwei zu einem Paar gruppierten Kanten als Histogramm zu erhalten und aus der Häufigkeitsverteilung diejenigen Abstände zwischen zwei gruppierten Kanten als Kanten-Sollbreiten zu ermitteln, die eine Häufigkeitsspitze oder ein Häufigkeitsplateau in dem Histogramm bilden, wobei das Histogramm auf Basis einer Transformation der Kamerabildkoordinaten in Weltkoordinaten unter Annahme eines Nickwinkels bei der Aufnahme des optischen Abbildes ermittelt wird; und
   - Bestimmen (58) des Gewichtungsfaktors, um für eine Kante den Gewichtungsfaktor für einen nachfolgenden Zyklus der Bestimmung der Faltungskorrelation im Schritt des Korrelierens derart zu bestimmen, dass das durch den Gewichtungsfaktor bestimmte Gewicht für eine Kante der als Paar gruppierten Kanten umso größer ist, je geringer die Abweichung des Abstandes zwischen den gruppierten Kanten und der Kanten-Sollbreite ist.

10. Computerprogramm mit Programmcode zur Durchführung eines Verfahrens gemäß Anspruch 9, wenn das Computerprogramm auf einem Computer ausgeführt wird.

**Claims**

1. A detector (10) for identifying a lane boundary from a digitalized optical image of the region in front of the vehicle, in which observed edges are marked, wherein the detector (10) has the following features:

   - a correlator (12) designed, in an image segment of the optical image, to subject the edges marked in the optical image to a convolution correlation and to weight the corresponding convolution response by a weighting factor in order to extract those edges having the N highest weighted convolution responses and to identify same as the lane boundary, N representing a predetermined natural number;
   - a histogram analysis unit (14) designed to group the extracted edges into pairs and to determine a frequency distribution of the distances between two paired edges as a histogram, and to determine, from the frequency distribution, those distances between two grouped edges, forming a frequency peak or a frequency plateau in the histogram, as nominal edge widths, the histogram being determined on the basis of a transformation of the camera image coordinates into world coordinates, assuming a pitch angle during the acquisition of the optical image; and
- a weighting factor determination unit (16) designed to determine, for an edge, the weighting factor for a subsequent cycle of the convolution correlation in the correlator (12) in such a way that the smaller the difference in the distance between the grouped edges and the nominal edge width, the greater the weight determined by the weighting factor for one edge of the paired edges.

2. The detector (10) according to Claim 1,
   **characterized in that**
   the weighting factor determination unit (16) is designed to determine the weighting factor G(k) of an edge k on the basis of the target function

$$G(k)= 1-\frac{|edge\ pair\ width - nominal\ edge\ width|}{maximum\ difference}$$

wherein the variable "edge pair width" represents the distance between the grouped edges observed in each case, which includes the edge k; the variable "nominal edge width" represents the nominal edge width and the variable "maximum difference" represents the maximum difference between the edge pair width and the nominal edge width.

3. The detector (10) according to any one of Claims 1 or 2,
   **characterized in that**
   the histogram analysis unit (14) is designed to take account of a frequency distribution in a preceding iteration step during the determination of the frequency distribution of the distances between two paired edges.

4. The detector (10) according to Claim 3,
   **characterized in that**
   the histogram analysis unit (14) is designed to determine the nominal edge width such that, in the event that a higher value of a determined nominal edge width is observed compared to a nominal edge width determined in an earlier iteration step, this higher value is used as the nominal edge width.

5. The detector (10) according to any one of Claims 3 or 4,
   **characterized in that**
   the histogram analysis unit (14) is designed to determine the nominal edge width, such that in the event that a lower value of a determined nominal edge width is observed compared to a nominal edge width determined in an earlier iteration step, a low-pass filtering of these two determined values is carried out for the nominal edge width.

6. The detector (10) according to any one of Claims 1 to 5,
   **characterized in that**
   the histogram analysis unit (14) is designed to calculate a plurality of histograms which are in each case determined assuming differing pitch angles during the acquisition of the optical image, wherein the histogram analysis unit (14) is additionally designed to select that pitch angle as valid, on the basis of which that histogram with the most pronounced frequency peaks is observed, and wherein the detector (10) additionally has a conversion unit which is designed to determine, from the optical image and the selected pitch angle, the real dimension of the lane boundary in front of the vehicle.

7. The detector (10) according to any one of Claims 1 to 6,
   **characterized in that**
   the histogram analysis unit (14) is designed to identify edges of multiple marking by means of a comparison of the distances and frequencies of paired edges in at least two different locations, at which frequency peaks or frequency plateaus are observed in the histogram.

8. The detector (10) according to Claim 8,
   **characterized in that**
   the histogram analysis unit (14) is designed to identify a double marking, if a frequency peak or a frequency plateau is detected in the histogram which, compared to an additional frequency peak or an additional frequency plateau, has two to three times the width and half the number of frequencies.

9. A method (50) for identifying a lane boundary from a digitalized optical image of the region in front of the vehicle, in which observed edges are marked, wherein the method comprises the following steps:

- correlating (52) of an edge marked in an image segment of the optical image in a convolution correlation and weighting of the convolution response by a weighting factor, in order to extract those edges having the N highest weighted convolution responses and to identify same as the lane boundary, N representing a predetermined natural number;
- forming and analyzing (56) of a histogram, in order to group the extracted edges into pairs and in order to obtain a frequency distribution of the distances between two paired edges as a histogram and to determine, from the frequency distribution, those distances between two grouped edges, forming a frequency peak or a frequency plateau in the histogram, as nominal edge widths, the histogram being determined on the basis of a transformation of the camera image coordinates into world coordinates, assuming a pitch angle during the acquisition of the optical image; and
- determining (58) of the weighting factor, in order to determine, for an edge, the weighting factor for a subsequent cycle of the determination of the convolution correlation in the correlation stage in such a way that the smaller the difference in the distance between the grouped edges and the nominal edge width, the greater the weight determined by the weighting factor for one edge of the paired edges.

10. A computer program with source code for carrying out a method according to Claim 9, when the computer program is run on a computer.

## Revendications

1. Détecteur (10), permettant de détecter une limite de voie à partir d'une représentation optique numérisée de la zone en avant du véhicule, où sont marquées des bordures apparues, ledit détecteur (10) présentant les caractéristiques suivantes :

- un corrélateur (12), prévu pour soumettre les bordures marquées dans la représentation optique à une corrélation de convolution dans un segment d'image de la représentation optique, et pour pondérer la réponse de convolution correspondante par un facteur de pondération afin d'extraire les bordures présentant les N réponses de convolution maximales et d'identifier celles-ci comme limites de voie, N étant un nombre naturel défini ;
- une unité d'analyse d'histogramme (14) prévue pour grouper en paires les bordures extraites et déterminer sous forme d'histogramme une distribution de fréquence des distances entre deux bordures appariées, et pour déterminer comme largeurs de consigne de bordures à partir de la distribution de fréquence, les distances entre deux bordures appariées qui forment une crête de fréquence ou un plateau de fréquence dans l'histogramme, ledit histogramme étant déterminé sur la base d'une transformation des coordonnées d'image de caméra dans des coordonnées universelles en admettant un angle d'inclinaison à l'enregistrement de la représentation optique ; et
- une unité de détermination de facteur de pondération (16) prévue pour déterminer pour une bordure le facteur de pondération pour un cycle consécutif de la corrélation de convolution dans le corrélateur (12), de sorte que le poids déterminé par le facteur de pondération pour une des bordures appariées soit d'autant plus élevé que l'écart de distance entre les bordures appariées et la largeur de bordures de consigne est réduit.

2. Détecteur (10) selon la revendication 1,
   **caractérisé en ce que**
   l'unité de détermination de facteur de pondération (16) est prévue pour déterminer le facteur de pondération G(k) d'une bordure k sur la base de la fonction de destination

$$G(k) = 1 - \frac{|\text{largeur de paire de bordures - largeur de bordures de consigne}|}{\text{écart maximal}}$$

où la variable "largeur de paire de bordures" représente la distance entre les bordures appariées respectivement considérées, auxquelles appartient la bordure k ; la variable "largeur de bordures de consigne" représente la largeur de bordures de consigne et la variable "écart maximal" représente l'écart maximal entre la largeur de paire de bordures et la largeur de bordures de consigne.

3. Détecteur (10) selon la revendication 1 ou la revendication 2,

**caractérisé en ce que**
l'unité d'analyse d'histogramme (14) est prévue pour tenir compte d'une distribution de fréquence lors d'une étape d'itération antérieure pour la détermination de la distribution de fréquence des distances entre deux bordures appariées.

4. Détecteur (10) selon la revendication 3,
**caractérisé en ce que**
l'unité d'analyse d'histogramme (14) est prévue pour déterminer la largeur de bordures de consigne de manière qu'en cas de survenue d'une valeur d'une largeur de bordures de consigne déterminée supérieure à une largeur de bordures de consigne déterminée lors d'une étape d'itération antérieure, ladite valeur supérieure sera utilisée comme largeur de bordures de consigne.

5. Détecteur (10) selon la revendication 3 ou la revendication 4,
**caractérisé en ce que**
l'unité d'analyse d'histogramme (14) est prévue pour déterminer la largeur de bordures de consigne de telle manière qu'en cas de survenue d'une valeur déterminée inférieure à une largeur de bordures de consigne déterminée lors d'une étape d'itération antérieure, un filtrage passe-bas desdites deux valeurs déterminées sera exécuté pour la largeur de bordures de consigne.

6. Détecteur (10) selon l'une des revendications 1 à 5,
**caractérisé en ce que**
l'unité d'analyse d'histogramme (14) est prévue pour calculer une pluralité d'histogrammes respectivement déterminés en admettant différents angles d'inclinaison à l'enregistrement de la représentation optique, l'unité d'analyse d'histogramme (14) étant en outre prévue pour sélectionner comme valide l'angle d'inclinaison sur la base duquel est formé l'histogramme présentant les crêtes de fréquence les plus marquées, et ledit détecteur (10) comprenant en outre une unité de conversion prévue pour effectuer une détermination de la dimension effective de la limite de voie en avant du véhicule à partir de la représentation optique et de l'angle d'inclinaison sélectionné.

7. Détecteur (10) selon l'une des revendications 1 à 6,
**caractérisé en ce que**
l'unité d'analyse d'histogramme (14) est prévue pour identifier les bordures d'un marquage multiple par comparaison des distances et des fréquences de bordures appariées à au moins deux emplacements différents où apparaissent des crêtes de fréquence ou des plateaux de fréquences dans l'histogramme.

8. Détecteur (10) selon la revendication 8,
**caractérisé en ce que**
l'unité d'analyse d'histogramme (14) est prévue pour identifier un double marquage quand sont détectés dans l'histogramme une crête de fréquence ou un plateau de fréquence présentant une largeur double ou triple et un nombre de fréquences réduit de moitié comparativement à une autre crête de fréquence ou à un autre plateau de fréquence.

9. Procédé (50) de détection d'une limite de voie à partir d'une représentation optique numérisée de la zone devant le véhicule, où sont marquées des bordures apparues, ledit procédé comprenant les étapes suivantes :

   - corrélation (52) dans une corrélation de convolution d'une bordure identifiée dans un segment d'image de la représentation optique, et pondération de la réponse de convolution par un facteur de pondération afin d'extraire les bordures présentant les N réponses de convolution maximales et d'identifier celles-ci comme limites de voie, N étant un nombre naturel défini ; formation et analyse (56) d'un histogramme, pour grouper en paires les bordures extraites et obtenir sous forme d'histogramme une distribution de fréquence des distances entre deux bordures appariées, et pour déterminer comme largeurs de consigne de bordures à partir de la distribution de fréquence, les distances entre deux bordures appariées qui forment une crête de fréquence ou un plateau de fréquence dans l'histogramme, ledit histogramme étant déterminé sur la base d'une transformation des coordonnées d'image de caméra dans des coordonnées universelles en admettant un angle d'inclinaison à l'enregistrement de la représentation optique ; et
   - détermination (58) du facteur de pondération, pour déterminer pour une bordure le facteur de pondération pour un cycle consécutif de la corrélation de convolution lors de l'étape de corrélation, de sorte que le poids déterminé par le facteur de pondération pour une des bordures appariées soit d'autant plus élevé que l'écart de distance entre les bordures appariées et la largeur de bordures de consigne est réduit.

**10.** Programme informatique avec un code programme pour l'exécution d'un procédé selon la revendication 9 quand ledit programme informatique est exécuté sur un ordinateur.

Fig. 1

Abstand in cm →

Fig. 2

Fig. 3

**IN DER BESCHREIBUNG AUFGEFÜHRTE DOKUMENTE**

**In der Beschreibung aufgeführte Patentdokumente**

- DE 102005044977 A1

- WO 2007033627 A1

**In der Beschreibung aufgeführte Nicht-Patentliteratur**

- GOLD: A PARALLEL REAL-TIME STEREO VISION SYSTEM FOR GENERIC OBSTACLE AND LANE DETECTION. **BERTOZZI M et al.** IEEE TRANSACTIONS ON IMAGE PROCESSING. IEEE SERVICE CENTER, 01. Januar 1998, vol. 7, 62-80